# EUROPÄISCHE PATENTSCHRIFT

(11) **EP 3 173 279 B1**
(45) Veröffentlichungstag und Bekanntmachung des Hinweises auf die Patenterteilung: **15.12.2021**
(21) Anmeldenummer: 16194409.5
(22) Anmeldetag: 18.10.2016
(51) Int. Cl.: B60K 37/06, B60H 1/00

(54) **VERFAHREN UND SYSTEM ZUM BETREIBEN EINER BELÜFTUNGSEINRICHTUNG IN EINEM FAHRZEUG**
METHOD AND SYSTEM FOR OPERATING A VENTILATION DEVICE IN A VEHICLE
PROCÉDÉ ET SYSTÈME DE FONCTIONNEMENT D'UN DISPOSITIF D'AÉRATION DANS UN VÉHICULE

(30) Priorität: 10.11.2015 DE 102015222039
(43) Veröffentlichungstag der Anmeldung: 31.05.2017
(73) Patentinhaber: VOLKSWAGEN AKTIENGESELLSCHAFT, 38440 Wolfsburg (DE)
(72) Erfinder: Herdey, Jan, 38110 Braunschweig (DE); Cengil, Sükrü, 30938 Burgwedel (DE); Bachorski, Tomasz, 38176 Wendeburg (DE)

(56) Entgegenhaltungen:
- DE-A1- 19 735 976
- DE-A1-102008 017 051
- DE-A1-102011 007 351
- DE-A1-102012 016 109
- DE-A1-102014 011 622
- DE-A1-102014 204 890
- DE-A1-102014 209 247

## Beschreibung

Die vorliegende Erfindung betrifft ein Verfahren zum Betreiben einer Belüftungseinrichtung in einem Fahrzeug, bei dem zumindest ein Luftstrom im Innenraum des Fahrzeugs erzeugt und ein Wert zumindest eines Parameters der einströmenden Luft erfasst wird. In Abhängigkeit von dem Wert des erfassten Parameters werden Graphikdaten einer Anzeige erzeugt, wobei die Anzeige eine Darstellung des Fahrzeugs und zumindest ein Graphikelement umfasst, das dem Wert des erfassten Parameters zugeordnet ist. Die Graphikdaten der Darstellung werden anschließend angezeigt. Die Erfindung betrifft ferner ein System zum Betreiben einer Belüftungseinrichtung in einem Fahrzeug sowie ein Fahrzeug mit einer Belüftungseinrichtung und einem solchen System zum Betreiben der Belüftungseinrichtung.

In einem Fahrzeug, insbesondere in einem Kraftfahrzeug, ist eine Vielzahl von Einrichtungen vorgesehen, welche die Sicherheit während der Fahrt und den Komfort für die Fahrzeuginsassen verbessern sollen. Dazu zählen beispielsweise Fahrerassistenzsysteme, Beleuchtungseinrichtungen für die äußere Umgebung oder den Innenraum des Fahrzeugs, Klimatisierungseinrichtungen oder multimediale Unterhaltungssysteme des Fahrzeugs. Mit zunehmender Anzahl und Komplexität der einzelnen Komponenten wächst die Herausforderung, für den Fahrer oder andere Fahrzeuginsassen die Bedienung dieser Einrichtungen möglichst einfach zu machen und Informationen über den Zustand des Systems im Fahrzeug leicht erfassbar darzustellen. In modernen Fahrzeugen werden daher vielfach Multifunktionsbediensysteme eingesetzt, welche eine oder mehrere Multifunktionsanzeigen und Bedienelemente umfassen, mit denen die vielfältigen im Fahrzeug enthaltenen Einrichtungen bedient und Informationen ausgegeben werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Eine Fahrzeugeinrichtung, die das Fahrerlebnis für die Fahrzeuginsassen wesentlich beeinflusst, ist die Belüftungseinrichtung. Die Luft in dem relativ kleinen Innenraumvolumen des Fahrzeugs ist anfällig für eine Belastung mit Gerüchen und Schadstoffen, insbesondere auch Partikeln aus der Umgebung des Fahrzeugs. Durch die bei der Fahrt vom Fahrzeug und anderen Verkehrsteilnehmern aufgewirbelte Luft können beispielsweise Staub, Pollen oder Schmutzpartikel im Straßenbereich verstärkt auftreten und durch geöffnete Fenster oder die Belüftungseinrichtung ins Fahrzeug gelangen. Ferner können Emissionen anderer Verkehrsteilnehmer dazu führen, dass unangenehme Gerüche und Schadstoffe ins Fahrzeug gelangen. Zur Verbesserung der Luftqualität im Fahrzeuginnenraums kann daher eine Vielzahl verschiedener Einrichtungen in einem modernen Fahrzeug verfügbar sein. Allerdings ist es bei den bestehenden Systemen für den Nutzer oft schwierig zu erkennen, in welchem gegenwärtigen Zustand sich das System befindet, wie weit die Veränderung der Luftqualität fortgeschritten ist und welche Einrichtungen aktiv sind. Ferner setzt die Bedienung einer Belüftungseinrichtung häufig mehrere oder komplizierte Schritte voraus.

Das Dokument DE 10 2014 011622 A1 wird als nächstliegender Stand der Technik erachtet.

Es ist daher die Aufgabe der vorliegenden Erfindung, ein Verfahren und ein System um Betreiben einer Belüftungseinrichtung in einem Fahrzeug bereitzustellen, die es dem Nutzer erlauben, schnell, einfach und umfassend Informationen über die Veränderung der Luftqualität im Fahrzeuginnenraum zu erfassen sowie verschiedene Funktionen der Belüftungseinrichtung zu bedienen.

Erfindungsgemäß wird diese Aufgabe durch ein Verfahren mit den Merkmalen des Anspruchs 1, ein System mit den Merkmalen des Anspruchs 13 und ein Fahrzeug mit den Merkmalen des Anspruchs 14 gelöst. Vorteilhafte Ausgestaltungen und Weiterbildungen ergeben sich aus den abhängigen Ansprüchen.

Das erfindungsgemäße System der eingangs genannten Art ist dadurch gekennzeichnet, dass der erfasste Parameter die Zusammensetzung der einströmenden Luft betrifft, wobei die Anzeige zumindest eine Schaltfläche umfasst und, wenn eine Auswahl der Schaltfläche erfasst wird, der Wert des Parameters der einströmenden Luft verändert wird.

Es wird also ein Parameter der Luft erfasst, die in den Innenraum des Fahrzeugs einströmt, und eine Anzeige für den erfassten Wert wird dem Nutzer angezeigt. Dazu wird die graphische Anzeige so erzeugt und ausgegeben, dass sie eine Darstellung des Fahrzeugs und ein Graphikelement umfasst, das dem Nutzer ein schnelles und einfaches Erfassen des dargestellten Wertes ermöglicht. Dieses Erfassen wird durch die Darstellung des Fahrzeugs in vorteilhafter Weise erleichtert, da dem Nutzer so die Orientierung erleichtert wird und örtliche Informationen relativ zum Fahrzeug ausgegeben werden können.

Der erfasste Parameter betrifft erfindungsgemäß die Zusammensetzung der Luft. Als "Zusammensetzung" der Luft wird erfindungsgemäß die Gesamtheit der in der Luft enthaltenen Stoffe betrachtet. Beispielsweise können dies Gase, Partikel, Duftstoffe oder geladene Teilchen sein. Die Zusammensetzung der Luft ist neben ihren klimatischen Eigenschaften, etwa Temperatur oder Strömungsgeschwindigkeit, von besonderer Bedeutung für die Fahrzeuginsassen und eine entscheidende Komponente dessen, was zusammenfassend als "Luftqualität" bezeichnet werden kann.

Der Wert des Parameters kann beispielsweise Auskunft über eine Behandlung der Luft geben, beispielsweise ob eine Luftreinigungs-, lonisierungs- oder Beduftungsfunktion aktiviert ist. Ferner kann eine Eigenschaft der Luft gemessen werden, beispielsweise durch einen Sensor. Insbesondere kann der Parameter Informationen über die Zusammensetzung der Luft umfassen, die anhand weiterer Daten ermittelt werden, etwa anhand der Betriebsparameter der Belüftungseinrichtung. Der erfasste Wert kann also in einem einfachen Fall 1 oder 0 sein, je nachdem, ob eine bestimmte Funktion zur Behandlung der einströmenden Luft aktiviert ist oder nicht. Ferner kann der Wert des Parameters eine Konzentration von Stoffen in der Luft repräsentieren oder auf andere Weise die Zusammensetzung der Luft wiedergeben.

Der Nutzer kann daher bei dem erfindungsgemäßen Verfahren in vorteilhafter Weise Parameter der Luftqualität im Innenraum schnell und einfach erfassen sowie den Fortschritt der Belüftungseinrichtung des Fahrzeugs bei der Veränderung der Luftqualität, insbesondere der Zusammensetzung der einströmenden Luft, verfolgen. Ferner kann die Darstellung auch weitere Informationen zur Luft umfassen, etwa die Temperatur oder die Strömungsgeschwindigkeit und -richtung.

Es ist erfindungsgemäß vorgesehen, dass ferner eine Bedienung der Belüftungseinrichtung des Fahrzeugs durchgeführt wird. Dazu umfasst die Anzeige eine Schaltfläche, die der Nutzer auswählen kann.

Unter einer Schaltfläche wird im Sinne der Erfindung ein Steuerelement einer graphischen Benutzerschnittstelle verstanden. Eine Schaltfläche unterscheidet sich von Elementen und Flächen zur reinen Informationsanzeige, sogenannten Anzeigeelementen bzw. Anzeigenflächen, darin, dass sie auswählbar ist. Bei einer Auswahl einer Schaltfläche wird eine zugeordnete Funktion ausgeführt. Die Funktion kann nur zu einer Veränderung der Informationsanzeige führen. Ferner können über die Schaltfläche Einrichtungen gesteuert werden, insbesondere die Belüftungseinrichtung, deren Bedienung von der Informationsanzeige unterstützt wird. Die Schaltfläche kann somit einen herkömmlichen mechanischen Schalter ersetzen. Sie kann beliebig für eine frei programmierbare Anzeigefläche erzeugt und von dieser angezeigt werden.

Zur Auswahl der Schaltfläche in der Anzeige können verschiedene Bedienvorrichtungen des Fahrzeugs verwendet werden, beispielsweise ein Dreh-Drück-Steller, ein Taster oder eine berührungsempfindliche Oberfläche, die oberhalb der Anzeigefläche angeordnet ist. In dem letzteren Fall wird ein sogenannter Touchscreen bereitgestellt. Beispielsweise kann eine Folie über der Anzeigefläche angeordnet sein, mit welcher die Position einer Berührung eines Betätigungsobjekts detektiert werden kann. Bei dem Betätigungsobjekt handelt es sich insbesondere um die Fingerspitze eines Nutzers. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einer auf der Anzeigefläche angezeigten Schaltfläche zugeordnet werden. Des Weiteren kann die Dauer der Berührung bei einer bestimmten Position oder innerhalb eines bestimmten Bereichs erfasst werden.

Durch die Auswahl der Schaltfläche wird insbesondere der Wert des Parameters verändert. Dabei kann beispielsweise eine Funktion der Belüftungseinrichtung aktiviert oder deaktiviert werden oder es kann eine Funktion eingestellt werden. Beispielsweise kann eine Luftreinigungsfunktion, eine Ionisierungsfunktion oder eine Beduftungsfunktion gesteuert werden. Ferner können weitere Parameter der einströmenden Luft wie Temperatur, Flussrichtung und Intensität gesteuert werden.

Bei einer Weiterbildung der Erfindung umfasst die Darstellung des Fahrzeugs eine Ansicht eines Bereichs des Innenraums des Fahrzeugs, insbesondere des Bereichs der Fahrzeuginsassen, und einen Bereich der äußeren Oberfläche des Fahrzeugs. Beispielsweise kann eine Außenansicht des Fahrzeugs so dargestellt werden, dass der Blick in den Innenraum freigegeben wird, weil umgebende Bereiche des Fahrzeugs transparent dargestellt sind oder fehlen. Dadurch kann vorteilhafterweise ein direkter räumlicher Bezug der Darstellung zur Behandlung der Luft für den Innenraum hergestellt werden.

Die Darstellung kann insbesondere dreidimensional erfolgen. Auch dies erleichtert dem Nutzer die Orientierung, da er auf diese Weise einen direkten Bezug zu der Situation im realen Fahrzeuginnenraum herstellen kann.

Bei einer weiteren Ausgestaltung der Erfindung umfasst das Graphikelement zumindest einen Bereich der Außenfläche des Fahrzeugs. Dadurch kann vorteilhafterweise die Darstellung des Fahrzeugs selbst als Graphikelement zur Anzeige des erfassten Werts des Parameters genutzt werden, statt ein weiteres Graphikelement darstellen zu müssen. Zudem kann dadurch klar herausgestellt werden, dass der erfasste Parameter den Innenraum des Fahrzeugs umfasst, der ja von der Außenfläche umgeben wird. Dies erlaubt zudem eine Darstellung, die sich auf einzelne Bereiche des Fahrzeugs bezieht.

Gemäß einer Ausgestaltung des erfindungsgemäßen Verfahrens umfasst der erfasste Parameter eine Partikelkonzentration in der einströmenden Luft. Der Nutzer kann dadurch vorteilhafterweise erkennen, wie stark die Luft durch Partikel belastet ist, ob eine Luftreinigung durchgeführt wird und wie weit diese gegebenenfalls fortgeschritten ist.

Die Luftreinigungsfunktion dient der Reinigung der Fahrzeuginnenraumluft. Beim Start der Funktion beginnt ein Reinigungsprozess und verbessert die Innenraumluftqualität bis zum Erreichen eines Maximalwertes. Dieser Maximalwert entspricht insbesondere einer geringsten Konzentration von Partikeln in der Luft. An diesem Punkt wird die maximale Luftqualität gehalten. Die Zeitspanne zwischen Start- und Endpunkt der Reinigung wird als "Rampe" bezeichnet. Während dieser Zeitspanne läuft der Reinigungsprozess. Die Rampe kann in mehrere Schritte oder Stufen eingeteilt werden. Ein Sensor misst die Qualität der Innenraumluft und ordnet sie einer dieser Sauberkeitsstufen zu. Beispielsweise kann dazu ein AQS (*air quality sensor*) verwendet werden. Beispielsweise kann die Rampe einige Minuten, etwa zwei Minuten, dauern und etwa in zehn Schritte geteilt sein. In der Darstellung der Partikelkonzentration kann dabei das Graphikelement, das der Partikelkonzentration zugeordnet ist, die aktuelle Sauberkeitsstufe für den Nutzer erfassbar darstellen. Dies kann etwa durch die Verwendung verschiedener Symbole oder verschiedener Symboleigenschaften erreicht werden, etwa durch eine sich im Verlaufe des Reinigungsprozesses verändernde Größe des Graphikelements oder die Anzahl von Graphikelementen in der Darstellung.

Wird der Luftreinigungsprozess gestört oder unterbrochen, etwa wenn beim Öffnen eines Fensters ungereinigte Außenluft in das Fahrzeug eindringt und sich die Konzentration von Partikeln im Innenraum erhöht, so kann auch diese Veränderung der Luftqualität erfasst und dargestellt werden. Beispielsweise kann der Fortschritt der Luftreinigung angezeigt werden, etwa als prozentualer oder absoluter Wert.

Bei einer Weiterbildung umfasst der erfasste Parameter einen lonisationsgrad der einströmenden Luft. Dadurch kann der Benutzer vorteilhafterweise erkennen, zu welchem Grad die einströmende Luft ionisiert ist und wie weit die Ionisationsfunktion fortgeschritten ist.

Durch die Ionisationsfunktion sollen durch die künstliche Erzeugung von Radikalen chemische Prozesse in Gang gebracht werden, die zur Bindung und Neutralisation unerwünschter Stoffe und Geruchsträger beitragen. Die Luft wird damit aktiviert und reaktionsbereit gemacht. Insbesondere können bei der Ionisation Sauerstoffmoleküle elektrisch geladen werden, was wiederum zur elektrischen Aufladung von Luftverunreinigungen führen kann, wodurch insbesondere die Luftreinigung unterstützt wird. Analog zur Luftreinigung kann auch der Verlauf der Ionisation der Innenraumluft anhand einer Rampe dargestellt werden, wobei mehrere lonisationsstufen zwischen einem minimalen und einem maximalen Wert definiert sein können. Insbesondere wird der lonisationsgrad durch einen Sensor gemessen. Unter dem Begriff "Ionisationsgrad" wird erfindungsgemäß in einem weiteren Sinne auch die Information gefasst, ob die Ionisierung der Luft durchgeführt wird oder nicht.

Bei einer weiteren Ausbildung umfasst der erfasste Parameter eine Beduftung der einströmenden Luft. Dem Nutzer kann dadurch vorteilhafterweise angezeigt werden, ob und wie die Innenraumluft beduftet worden ist.

Der Luft kann aus einem Reservoir gegebenenfalls eine einstellbare Menge an Duftstoffen beigemischt werden. Es kann dabei ein einzelner Duftstoff verwendet werden, allerdings können auch mehrere Duftstoffe gleichzeitig beigemischt werden. Auch der Fortschritt der Beduftung kann anhand einer Rampe dargestellt werden, wobei mehrere Beduftungsstufen definiert sein können, um dem Nutzer den Fortschritt der Beduftung von der Abwesenheit von Duftstoffen bis zur maximalen Beduftung der Luft darzustellen. Ferner kann analog zum lonisationsgrad auch der die Beduftung betreffende Parameter lediglich die Information umfassen, ob die Beduftungsfunktion aktiv ist oder nicht.

Die Darstellung kann eine Vielzahl geometrischer Objekte umfassen, deren Anzahl, Position, Farbe und/oder Größe von dem Wert abhängt, der zu dem Parameter der einströmenden Luft erfasst worden ist. Die Anzeige der Zusammensetzung der einströmenden Luft erfolgt demnach in vorteilhafter Weise so, dass der Nutzer der Darstellung eine quantitative Aussage über den erfassten Wert entnehmen kann.

Beispielsweise kann die Rampe, die den Fortschritt eines Systems der Belüftungseinrichtung abbildet, dargestellt werden, indem die geometrischen Objekte so angezeigt werden, dass die jeweils erreichte Stufe der Änderung der Luftqualität erfasst werden kann. Beispielsweise können viele geometrische Objekte eine höhere Konzentration eines Stoffes in der Luft darstellen, während eine geringere Zahl eine kleinere Konzentration darstellt. Ferner können größere geometrische Objekte einen höheren Wert darstellen, während kleinere geometrische Objekte einen niedrigeren Wert darstellen. Durch die Position der geometrischen Objekte innerhalb der Anzeige kann eine Ortsinformation über die Luftqualität dargestellt werden, beispielsweise kann auf diese Weise verdeutlicht werden, wo im Fahrzeug sich die einzelnen Komponenten der Belüftungseinrichtung befinden, wie weit sich die Luftqualität in verschiedenen Bereichen des Fahrzeuginnenraums unterscheidet und welche einzelnen Komponenten der Belüftungseinrichtung aktiv sind. Die Darstellung der geometrischen Objekte mit verschiedenen Farben kann weitere Informationen beinhalten und für den Nutzer erfassbar darstellen. Es können ferner verschiedene geometrische Objekte für verschiedene erfasste Parameter dargestellt werden, beispielsweise können so gleichzeitig verschiedene erfasste Parameter dargestellt werden. Beispielsweise können der Luftreinigung, der Ionisation und der Beduftung der Innenraumluft verschiedene geometrische Formen zugeordnet werden, sodass der Nutzer schnell und einfach erkennen kann, welches dargestellte Objekt sich auf welchen Parameter bezieht. Die dargestellten geometrischen Objekte können ferner Zeichen oder Symbole umfassen, beispielsweise kann die elektrische Ladung in der Luft bei der Ionisationsfunktion durch die Darstellung eines Plus- oder Minus-Zeichens dargestellt werden.

Die Darstellung kann ferner zumindest ein weiteres Graphikelement umfassen, das einen Luftstrom im Fahrzeug darstellt und eine Strukturierung in Abhängigkeit von einer Aktivierung einer Funktion der Belüftungseinrichtung aufweist. Der Nutzer kann so vorteilhafterweise erkennen, ob ein Luftstrom im Fahrzeug erzeugt wird und welche Eigenschaften dieser hat, bzw. ob eine Funktion aktiviert ist, die Parameter der Luft im Innenraum verändert.

Beispielsweise kann das Graphikelement, das den Luftstrom darstellt, so angezeigt werden, dass der Nutzer erkennen kann, wo im Innenraum des Fahrzeugs Luft ausströmt. Ferner können mehrere Luftströme gleichzeitig angezeigt werden. Die Gestaltung des Graphikelements kann für den Benutzer etwa klimatische Eigenschaften sichtbar machen, etwa die Temperatur der Luft. Dazu kann das Graphikelement beispielsweise in verschiedenen Farben gestaltet sein, um die dargestellten Eigenschaften ablesbar zu machen. Beispielsweise kann der Luftstrom als eine Fläche dargestellt werden, die von einem Element der Belüftungseinrichtung ausgeht und in den Fahrzeuginnenraum hinein reicht. Das Graphikelement kann dabei eine Struktur aufweisen, um dem Nutzer anzuzeigen, dass die Luft in einer bestimmten Weise behandelt wurde. Beispielsweise kann eine homogene Fläche anzeigen, dass die Luft unbehandelt einströmt. Beim Einschalten der Reinigung kann sich ein beispielsweise als geschlossener Luftfilm dargestellter Luftstrom so verändern, dass eine gefächerte, lamellierte Erscheinung, die wie gekämmt aussieht, das Ergebnis einer Filtration darstellt und dem Nutzer signalisiert, dass die Luft nicht direkt einströmt, sondern zunächst gefiltert wird. Ferner können derzeit aktivierte Funktionen der Belüftungseinrichtung durch verschiedene Muster innerhalb des Graphikelements dargestellt werden.

Das Graphikelement, das den Luftstrom betrifft, kann ferner eine von der Temperatur der einströmenden Luft abhängige Farbe aufweisen. Die graphische Darstellung von Temperaturen durch eine Farbkodierung ist dem Nutzer aus verschiedenen anderen Anwendungen bekannt. Insbesondere können "warme" oder "kalte" Farben, beispielsweise Rot und Blau, dazu dienen, eine höhere oder tiefere Temperatur der einströmenden Luft darzustellen. Ferner können verschiedene Graustufen dazu dienen, die Temperatur der einströmenden Luft zu signalisieren. Die Temperatur kann anhand einer beliebigen Farbskala dargestellt werden.

In einer weiteren Ausbildung liegt der Wert des erfassten Parameters in einem Werteintervall, das durch einen Minimalwert und einen Maximalwert definiert ist. Der erfasste Wert wird durch das Graphikobjekt relativ zu dem Werteintervall dargestellt. Der Nutzer kann dadurch vorteilhafterweise den erfassten Wert in quantitativer Weise aus der Darstellung erfassen. Beispielsweise kann das Graphikelement eine Skala umfassen, an der ein weiteres Graphikelement so angeordnet ist, dass der Nutzer den erfassten Wert ablesen kann. Die Skala muss dazu nicht extra dargestellt werden, sondern es genügt, wenn der Nutzer aus der Darstellung erfassen kann, welches die Maximal- und die Minimalwerte in der Darstellung sind.

Bei einer Weiterbildung ist das Graphikelement, das dem Wert des erfassten Parameters zugeordnet ist, durch eine Ausdehnung charakterisiert, wobei die Ausdehnung des Graphikelements größer oder gleich einer Minimalausdehnung und kleiner oder gleich einer Maximalausdehnung ist. Dabei geben die Minimalausdehnung und die Maximalausdehnung den Minimalwert und den Maximalwert des definierten Werteintervalls an. Der Nutzer erkennt dadurch vorteilhafterweise schnell und einfach den erfassten Wert relativ zu dem Werteintervall.

Bei einer weiteren Ausführung beispielsweise stellt das Graphikelement ein geometrisches Objekt mit einer Längenausdehnung dar. Die Anzeige ist so in vorteilhafter Weis besonders leicht erfassbar.

Beispielsweise kann eine Balken einer bestimmten Länge dargestellt werden. Je höher der dargestellte Wert, desto größer kann beispielsweise die Länge eines solchen Graphikelementes sein. Ferner kann das Graphikelement durch seine Ausdehnung in mehrere Richtungen charakterisiert sein und dadurch etwa mehrere Werte, beispielsweise unterschiedliche Parameter, darstellen. Die minimale und die maximale Ausdehnung des Graphikelements können auf verschiedene Weisen definiert sein, beispielsweise durch die Ausdehnung eines zusätzlich dazu angeordneten geometrischen Objekts als Skala oder durch die Breite der für die Anzeige zur Verfügung stehenden Fläche.

Ferner kann das Graphikelement einen geschlossenen oder offenen Ring um die Darstellung des Innenraums darstellen. Bei einem solchen ringförmigen Graphikelement kann beispielsweise ein Mittelpunktswinkel von 360° der Maximalausdehnung und 0° der Minimalausdehnung entsprechen. In diesem Fall kann etwa der Fortschritt der Veränderung der Luftqualität im Fahrzeuginnenraum durch einen um die Darstellung des Innenraums herum sich schließenden Rings dargestellt werden. Dies erlaubt vorteilhafterweise die Darstellung des erfassten Parameters in einer für den Nutzer intuitiv erfassbaren Art.

Der Ring kann beispielsweise einen "Schutzwall" um den Innenraum symbolisieren. Diese Symbolik ist dem Nutzer aus anderen Zusammenhängen bekannt. Beispielsweise kann ein geschlossener Ring signalisieren, dass die maximale Sauberkeitsstufe der Innenraumluft erreicht wurde oder dass die Luft bis zu einem Maximalwert ionisiert wurde.

Wird beispielsweise der Fortschritt der Luftreinigungsfunktion durch ein ringförmiges Graphikelement dargestellt, so kann dabei vorteilhafterweise auf die Darstellung von Partikeln verzichtet werden, die der Nutzer mit Schmutz assoziiert. Dabei kann der Ring beispielsweise perspektivisch so dargestellt werden, dass er den Schutz der Fahrzeuginsassen symbolisiert. Dabei wird die Rampe, welche die Sauberkeitsstufen der Luft darstellt, durch den sich schließenden Ring dargestellt. Der Ring entspricht hierbei einer Schutzmauer um den Fahrzeuginnenraum. Ferner kann der Ring stets geschlossen angezeigt werden, wobei der Fortschritt der Reinigung etwa über eine farbliche Veränderung oder durch die Einbettung eines weiteren, konzentrischen Rings, der sich mit fortschreitender Luftreinigung schließt, dargestellt werden. Analog dazu kann etwa der Fortschritt der Ionisation oder der Fortschritt der Beduftung dargestellt werden.

Der Ring kann dabei auch durch eine alternative, vorzugsweise geschlossene geometrische Form dargestellt werden. Beispielsweise kann eine PKW-Kontur um die Darstellung des Fahrzeugs herum dargestellt werden.

Um eine verbesserte Verständlichkeit der Darstellung zu erreichen, kann zusätzlich zu dem ringförmigen Graphikelement eine Beschriftung angezeigt werden. Ferner können mehrere Ringe dargestellt werden, wobei beispielsweise ein stets geschlossen angezeigter Ring als Skala fungiert, während ein konzentrisch dazu sich schließender Ring den tatsächlichen Fortschritt der Veränderung der Luftqualität darstellt. Das ganz oder teilweise ringförmige Graphikelement kann ferner eine Farbe umfassen, die etwa angibt, welcher erfasste Parameter dargestellt wird. Ferner kann durch die Farbe weitere Information kodiert werden, beispielsweise kann der Fortschritt der Veränderung der Luftqualität zusätzlich durch einen Farbgradienten verdeutlicht werden oder etwa eine Temperierung der Luft kann dargestellt werden.

Das Graphikelement kann auch eine oberhalb der Darstellung des Innenraums angeordnete, im Wesentlichen rotationssymmetrische geometrische Form darstellen, insbesondere eine ganze oder teilweise Halbkugel. Dem Nutzer wird so in vorteilhafter Weise der Zustand der Luft im Fahrzeuginnenraum symbolisch dargestellt.

Eine das Fahrzeuginnenraum überdeckende Halbkugel, ganz oder teilweise ausgebildet, stellt in symbolischer und intuitiv leicht erfassbarer Weise die schützende Wirkung beispielsweise der Luftreinigung dar. Beispielsweise kann der Fortschritt der Luftreinigungsfunktion angezeigt werden, indem eine Kuppel über dem dargestellten Innenraum des Fahrzeugs entsteht, die das Interieur umschließt und überdeckt. Somit wird die Schutzmetapher noch deutlicher als 3D-Objekt dargestellt. Dabei kann sich die Kuppel sowohl von ihrem Ursprung oberhalb des Fahrzeuginnenraums aufbauen, als auch von einem Ring um das Fahrzeuginnere aus, der sich zu einem Zenit oberhalb des Fahrzeuginnenraums hin schließt. Ferner können Farben oder Farbgradienten weitere Informationen kodieren oder in redundanter Weise ebenfalls den Fortschritt angeben.

An Stelle einer Halbkugel oder eines anderen rotationssymmetrischen Objekts kann auch eine andere Geometrie verwendet werden, beispielsweise ein Quader, der den Innenraum einschließt, oder eine andere Form.

Insbesondere kann das Graphikelement so gebildet sein, dass es der Außenfläche des Fahrzeugs folgt. Es entspricht damit der äußeren Oberfläche der Karosserie des Fahrzeugs. Die Ausdehnung des Graphikelements kann in diesem Fall dem Bedeckungsgrad des Fahrzeuginnenraums entsprechen. Beispielsweise kann das Fahrzeug so dargestellt werden, dass ein Blick auf den Innenraum freigegeben wird und die Fahrzeughülle im Bereich des Fahrzeuginnenraums mehr oder weniger vollständig vorhanden ist. Beispielsweise kann sich die Darstellung der Oberfläche des Fahrzeugs, etwa des Verdecks, mit zunehmendem Wert des erfassten Parameters schließen oder öffnen. Dabei kann das Schließen oder Öffnen von verschiedenen Seiten und in verschiedene Richtungen erfolgen.

Indem das Graphikelement der äußeren Oberfläche des Fahrzeugs folgt, kann der dargestellte Innenraum des Fahrzeugs unterschiedliche stark überdeckt dargestellt werden. Die äußere Hülle symbolisiert dabei insbesondere eine Schutzschicht um das Fahrzeug und den Fahrzeuginnenraum herum, sodass ein in vorteilhafter Weise deutlicher Eindruck des sich aufbauenden Schutzes, etwa durch eine Luftreinigungsfunktion, einstellt. Die Bedeckung des Innenraums durch die Hülle kann dabei durch eine Veränderung der Überdeckung des Innenraums oder durch Variation der Darstellung der Hülle selbst erfolgen. Zum Beispiel kann sich die Hülle nur über einen Teilbereich des Innenraums erstrecken. Ferner kann die Hülle durchscheinend dargestellt werden, wobei der Grad der Transparenz oder Deckkraft variiert werden kann. Ferner kann ein Sich-Schließen der Hülle in verschiedene Richtungen und ausgehend von verschiedenen Bereichen und Punkten dargestellt werden. Das Schließen der Hülle kann ferner durch schrittweises Einblenden von Fragmenten der Hüllenstruktur oder durch Veränderung der Strukturierung der Hülle dargestellt werden.

Bei einer Ausbildung weist das Graphikelement eine in Abhängigkeit von dem Wert des Parameters gestaltete Strukturierung auf. Diese Strukturierung kann aus verschiedene Weise gebildet sein und es können mehrere Strukturierungen kombiniert dargestellt werden, um verschiedene Parameter darzustellen. Dadurch ist die Darstellung des Parameters vorteilhafterweise besonders leicht erfassbar.

Beispielsweise können Oberflächenstrukturen, Schraffuren oder Schattierungen dargestellt werden, ferner können regelmäßige oder unregelmäßige Strukturierungen dargestellt werden. In Abhängigkeit von dem erfassten Wert des Parameters kann die Strukturierung in ihrer Art oder Ausprägung verändert werden, sodass der Nutzer den Wert auch in quantitativer Weise erfassen kann.

Bei einer weiteren Ausbildung weist die Darstellung des Fahrzeugs zumindest einen Darstellungsparameter der Helligkeit, der Sättigung und/oder des Kontrasts auf und der Darstellungsparameter wird in Abhängigkeit von dem Wert des Parameters gebildet.

Dadurch kann in vorteilhafter Weise der erfasste Wert des Parameters direkt in der Darstellung des Fahrzeugs angezeigt werden. Beispielsweise kann die Darstellung des Innenraums durch Variation von Helligkeit, Sättigung und Kontrast mit zunehmendem Fortschritt der Luftreinigung immer deutlicher angezeigt werden. Dadurch wird dem Nutzer dargestellt, dass eine Annäherung an den Zielzustand erreicht wird. Diese Darstellungsweise kann alternativ oder zusätzlich zu anderen Darstellungen erzeugt werden.

Die Darstellung kann zumindest ein bewegtes Graphikelement umfassen, dessen Position sich mit der Zeit ändert. Dadurch kann vorteilhafterweise eine besonders leicht erfassbare Darstellung erzeugt werden.

Beispielsweise können geometrische Objekte dargestellt werden, die sich in einem Luftstrom zu bewegen scheinen. Die Graphikobjekte können sich dabei in Richtung des Luftstroms bewegen. Die Position der Graphikobjekte kann dabei angeben, auf welchen Bereich im Fahrzeuginnenraum sich die dargestellte Information bezieht. Diese Darstellung ist deshalb intuitiv erfassbar, weil Eigenschaften der im Luftstrom bewegten Luft durch bewegte Objekte dargestellt werden. Dabei können Eigenschaften des Luftstroms, beispielsweise seine Richtung, der Strömungsquerschnitt und die Strömungsgeschwindigkeit durch die Geschwindigkeit und Richtung der Bewegung der Graphikobjekte dargestellt werden.

Insbesondere kann sich das bewegte Graphikelement in Richtung des Luftstroms im Innenraum des Fahrzeugs bewegen und bei Erreichen einer definierten Position verschwinden. Werden beispielsweise bei der Darstellung der Luftreinigung Graphikobjekte angezeigt, die Partikel im Luftstrom symbolisieren, so können diese von dem Ursprung eines dargestellten Luftstroms ausgehen, sich in die Richtung der strömenden Luft bewegen und an einem definierten Ende des Luftstroms verschwinden. Auf diese Weise kann etwa die Reichweite eines Luftstroms im Innenraum dargestellt werden.

Bei einer Ausbildung der Erfindung umfasst die Darstellung zumindest ein zeitlich veränderlich dargestelltes Graphikelement. Dies erlaubt vorteilhafterweise eine ansprechende und leicht erfassbare Darstellung des erfassten Parameters der Luft.

Insbesondere kann die zeitlich veränderliche Darstellung des Graphikelements nicht oder nicht nur von dem Wert des Parameters oder dessen zeitlicher Entwicklung abhängen, sondern einen festen Ablauf wiedergeben, etwa nach Art einer vorgegebenen Animation. Beispielsweise kann der Aufbau einer "Schutzschicht" um den Innenraum des Fahrzeugs dargestellt werden, wobei weitere Informationen zu dem erfassten Wert, etwa der Typ einer aktivierten Belüftungsfunktion, zusätzlich dargestellt werden können, etwa durch eine Strukturierung der dargestellten Schutzschicht. Insbesondere kann das zeitlich veränderliche Graphikobjekt auch Teilobjekte umfassen, die zeitweise auftauchen und verschwinden. Beispielsweise kann eine Darstellung nach Art eines Funkenregens, von Tropfen oder von herein- und herausströmenden Partikeln erzeugt werden.

Ferner kann die Darstellung eine Animation umfassen, die zumindest einmal ausgegeben wird. Dabei kann eine Darstellung erzeugt werden, welche die Funktion einer Belüftungsfunktion deutlich macht. Beispielsweise kann die Animation einmal oder mehrere Male, nacheinander oder in Abständen, ausgegeben werden, nachdem eine bestimmte Funktion der Belüftung aktiviert wurde. Dem Nutzer kann so vorteilhafterweise dargestellt werden, in welcher Art sich der erfasste Parameter der Luft verändert und/oder verändern wird.

Bei einer weiteren Ausbildung wird die Darstellung des Innenraums aus einer Perspektive von seitlich oben erzeugt. Dies ist eine Darstellung, die vorteilhafterweise einen besonders guten Überblick über den Fahrzeuginnenraum erlaubt. Das Fahrzeug und sein Innenraum können dessen ungeachtet auch aus anderen Perspektiven dargestellt werden, insbesondere aus einer Perspektive von der Rückseite des Fahrzeugs her, die in etwa der Blickrichtung der Fahrzeuginsassen entspricht. Die Darstellung des Fahrzeuginnenraums kann ferner aus weiteren Perspektiven erfolgen, beispielsweise von oben, von vorne oder von der Seite.

Die Darstellung des Innenraums kann dabei insbesondere dreidimensional erfolgen und dabei entweder nur bestimmte Bereiche des Fahrzeuginnenraums oder im Wesentlichen den gesamten Innenraum umfassen. Ferner können weitere Bereiche des Fahrzeugs um den Innenraum herum umfasst sein, etwa der Bereich der Motorhaube oder der rückwärtigen Bereiche des Fahrzeugs. Insbesondere können dabei Sitze oder die Position der Sitze dargestellt werden. Ferner können Komponenten der Belüftungseinrichtung im Fahrzeug dargestellt werden, beispielsweise sogenannte Mannanströmer, die als Auslässe für einströmende Luft fungieren. Die Darstellung kann mit einem beliebigen Grad der Detaillierung erzeugt werden, beispielsweise können einzelne Einrichtungen innerhalb des Fahrzeuginnenraums angedeutet dargestellt werden. Die Darstellung kann ferner Teile des Fahrzeugäußeren umfassen.

Insbesondere kann eine Umschaltung zwischen verschiedenen Darstellungen vorgesehen sein, insbesondere bezüglich der Darstellung des Fahrzeuginnenraums und des Fahrzeugäußeren. Die Umschaltung zwischen den verschiedenen Darstellungen kann dabei über eine Animation (Filmsequenz) erfolgen. Dem Nutzer wird dadurch die Orientierung innerhalb der Anzeige erleichtert, wobei die Darstellung an die jeweiligen Bedürfnisse angepasst werden kann. Dies erlaubt gegebenenfalls auch eine Umschaltung zwischen einer zwei- und einer dreidimensionalen Darstellung, sofern diese vorgesehen sind.

Das erfindungsgemäße System zum Betreiben einer Belüftungseinrichtung in einem Fahrzeug umfasst zumindest eine Ausströmeinheit, durch die ein Luftstrom im Innenraum des Fahrzeugs erzeugbar ist. Sie umfasst ferner eine Erfassungseinheit, durch die ein Wert zumindest eines Parameters der einströmenden Luft erfassbar ist und eine Steuereinheit, durch die in Abhängigkeit von dem Wert des erfassten Parameters Graphikdaten einer Anzeige erzeugbar sind. Dabei umfasst die Anzeige eine Darstellung des Fahrzeugs und zumindest ein Graphikelement, das dem Wert des erfassten Parameters zugeordnet ist. Das System umfasst ferner eine Anzeigeeinheit zum Anzeigen der Graphikdaten. Das erfindungsgemäße System ist dadurch gekennzeichnet, dass der erfasste Parameter die Zusammensetzung der einströmenden Luft betrifft und die Anzeige zumindest eine Schaltfläche umfasst. Dabei ist eine Auswahl der Schaltfläche erfassbar und durch die Auswahl der Schaltfläche ist der Wert des Parameters der einströmenden Luft veränderbar.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Die Erfassungseinheit kann ferner einen Luftqualitätssensor umfassen, durch den der Wert einer Partikelkonzentration in der einströmenden Luft, eines lonisationsgrads der einströmenden Luft und/oder einer Beduftung der einströmenden Luft erfassbar ist. Dadurch kann der Wert des erfassten Parameters quantitativ bestimmt werden.

Das erfindungsgemäße Fahrzeug umfasst eine Belüftungseinrichtung sowie ein erfindungsgemäßes System zum Betreiben der Belüftungseinrichtung.

Die Erfindung wird nun anhand von Ausführungsbeispielen mit Bezug zu den Zeichnungen erläutert.
- Fig. 1: zeigt ein Ausführungsbeispiel des erfindungsgemäßen Fahrzeugs,
- Fig. 2: zeigt ein Ausführungsbeispiel einer Anzeige, die anhand des erfindungsgemäßen Verfahrens erzeugt und ausgegeben wird,
- Fig. 3A: bis 3C zeigen Ausführungsbeispiele einer graphischen Darstellung bei aktivierter Luftreinigungsfunktion,
- Fig. 4A: bis 4C zeigen Ausführungsbeispiele einer graphischen Darstellung bei aktivierter Beduftungsfunktion,
- Fig. 5A: bis 5C zeigen Ausführungsbeispiele einer graphischen Darstellung bei aktivierter Ionisierungsfunktion ,
- Fig. 6A: und 6B zeigen Ausführungsbeispiele einer graphischen Darstellung bei gleichzeitig aktivierter Ionisierungsfunktion und Beduftungsfunktion,
- Fig. 7: zeigt ein Ausführungsbeispiel einer graphischen Darstellung bei gleichzeitig aktivierter Luftreinigungsfunktion, Ionisierungsfunktion und Beduftungsfunktion, und
- Fig. 8A: und 8B zeigen Ausführungsbeispiele einer graphischen Darstellung mit einem Fortschrittsbalken bei aktivierter Luftreinigungsfunktion.

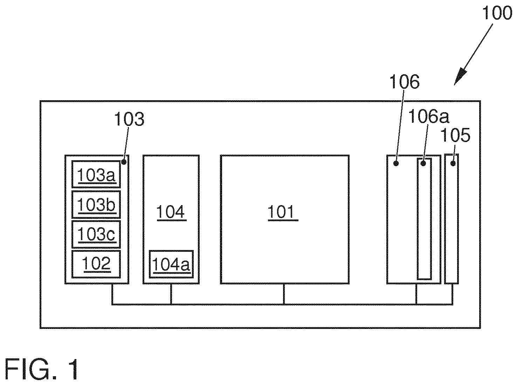

Mit Bezug zu Figur 1 wird ein Ausführungsbeispiel des erfindungsgemäßen Fahrzeugs erläutert.

Ein Fahrzeug 1 umfasst eine Belüftungseinrichtung 103. Ferner befindet sich im Innenraum des Fahrzeugs 100 die Ausströmeinheit 102, die von der Belüftungseinrichtung 103 umfasst ist. Die Belüftungseinrichtung 103 umfasst ferner drei funktionelle Einheiten, nämlich eine Luftreinigungseinheit 103a, eine Ionisierungseinheit 103b und eine Beduftungseinheit 103c. Durch die Belüftungseinrichtung 103 kann Luft aus dem Innenraum des Fahrzeugs 100 und/oder aus der Umgebung des Fahrzeugs 100 angesaugt werden, mittels der Belüftungsfunktionseinheiten 103a, 103b, 103c in Bezug auf die Zusammensetzung der Luft verändert werden und mittels der Ausströmeinheit 102 als Luftstrom in den Innenraum des Fahrzeugs 100 geleitet werden.

Das Fahrzeug 100 umfasst ferner eine Erfassungseinheit 104 mit einem Luftqualitätssensor 104a. Sie ist datentechnisch mit einer Steuereinheit 101 verbunden. Mittels des Luftqualitätssensors 104a kann die Erfassungseinheit 104 die Luftqualität im Fahrzeuginnenraum erfassen, insbesondere kann eine Konzentration von Partikeln in der Luft gemessen werden sowie der lonisationsgrad der Luft und Duftstoffe in der Luft. Die erfassten Werte werden an die Steuereinheit 101 übertragen. Ferner ist die Steuereinheit 101 datentechnisch mit der Belüftungseinrichtung 103 gekoppelt und erhält von dieser Daten darüber, welche Belüftungsfunktionen 103a, 103b, 103c aktiviert sind sowie mit welchen Einstellungen die Belüftungseinrichtung 103 und die Ausströmeinheit 102 betrieben werden. Anhand der zur Verfügung stehenden Daten erzeugt die Steuereinheit 101 Graphikdaten mit einer Darstellung des Fahrzeugs 100, wobei insbesondere der Innenraum des Fahrzeugs 100 dargestellt wird. Die Graphikdaten werden an eine mit der Steuereinheit 101 datentechnisch gekoppelte Anzeigeeinheit 106 übertragen und auf deren Anzeigefläche 106a angezeigt. Ferner ist über der Anzeigefläche 106a eine berührungsempfindliche Oberfläche 105 angeordnet; es wird also ein Touchscreen 105 bereitgestellt, durch den Eingaben des Nutzers erfassbar sind.

Die Belüftungseinrichtung 103 kann zusätzlich eine Klimatisierungseinheit umfassen, die beispielsweise die Temperatur der einströmenden Luft bestimmt. Beispielsweise kann auch die Luftfeuchtigkeit geregelt werden. Auch Daten über die Funktion der Klimatisierungseinheit könne in diesem Fall an die Steuereinheit 101 übertragen werden.

Mit Bezug zu Figur 1 wird nun die Ausführung des erfindungsgemäßen Verfahrens erläutert.

Im Innenraum des Fahrzeugs 100 wird durch die Ausströmeinheit 102 ein Luftstrom erzeugt. Der Luftqualitätssensor 104a erfasst Daten über die Luftqualität. Dies sind im dargestellten Fall der Status der Luftreinigung, bestimmt anhand der Konzentration von Partikeln in der Luft, der lonisationsgrad der Luft sowie der Grad der Beduftung der Luft im Innenraum des Fahrzeugs 100. Die erfassten Daten werden an die Steuereinheit 101 übertragen. Ferner werden von der Erfassungseinheit 104 Daten an die Steuereinheit 101 übertragen, welche die Aktivierung und Betriebsparameter der Belüftungsfunktionen 103a, 103b, 103c betreffen.

Die Steuereinheit 101 erzeugt nun Graphikdaten einer Darstellung des Innenraums des Fahrzeugs 100, die weiter unten mit Bezug zu den weiteren Figuren zu erläutern sein wird. Ferner umfasst die Darstellung Graphikelemente, die dem Wert der jeweiligen erfassten Parameter zugeordnet sind. Die Darstellung umfasst außerdem Schaltflächen die den Belüftungsfunktionen 103a, 103b, 103c zugeordnet sind. Insbesondere kann der Nutzer durch Berühren des Touchscreens 105 an der Position einer der Schaltflächen die zugeordnete Belüftungsfunktion 103a, 103b, 103c auswählen. Auf diese Weise können die Belüftungsfunktionen 103a, 103b, 103c einzeln aktiviert, deaktiviert oder eingestellt werden. Nachfolgend werden Beispiele von Darstellungen erläutert, die für verschiedene aktivierte Belüftungsfunktionen 103a, 103b, 103c erzeugt wurden.

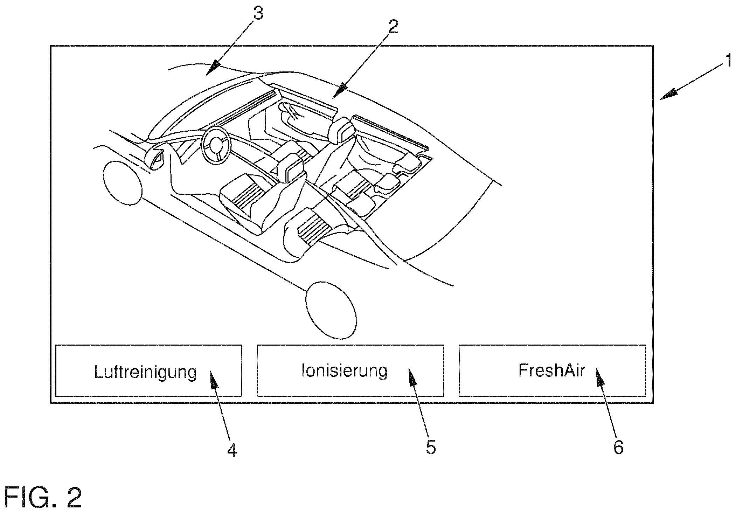

Mit Bezug zu Figur 2 wird ein Ausführungsbeispiel einer Anzeige 1, die anhand des erfindungsgemäßen Verfahrens erzeugt und ausgegeben wird, erläutert. Dabei wird von dem oben mit Bezug zu Figur 1 beschriebenen Fahrzeug ausgegangen.

Die Anzeige 1 umfasst die graphische Darstellung eines Fahrzeuginnenraums 2 und einer Fahrzeugoberfläche 3. Insbesondere entsprechen diese graphischen Darstellungen weitgehend dem tatsächlichen Erscheinungsbild des Fahrzeugs 1, wobei die Fahrzeugoberfläche 3 im Bereich des Innenraums 2 transparent dargestellt wird oder ganz fehlt.

Die Anzeige 1 umfasst ferner drei Schaltflächen 4, 5, 6, die im dargestellten Fall nicht ausgewählt sind. Sie sind den Belüftungsfunktionen 103a, 103b, 103c zugeordnet und können on dem Benutzer durch Berühren des Touchscreens 105 im Bereich der Schaltflächen 4, 5, 6 ausgewählt werden. Die Anzeige bezieht sich also auf einen Zustand des Systems, in dem keine der Belüftungsfunktionen 103a, 103b, 103c aktiviert ist. Die Schaltflächen 4, 5, 6 weisen ferner eine Beschriftung aus, die insbesondere die zugeordneten Belüftungsfunktionen 103a, 103b, 103c bezeichnen.

In einem weiteren Ausführungsbeispiel können die Schaltflächen 4, 5, 6 nicht nur ausgewählt werden, etwa um die Belüftungsfunktionen 103a, 103b, 103c zu aktivieren oder zu deaktivieren, sondern es können ferner Einstellungen erfasst werden, beispielsweise durch die Darstellung eines Reglers.

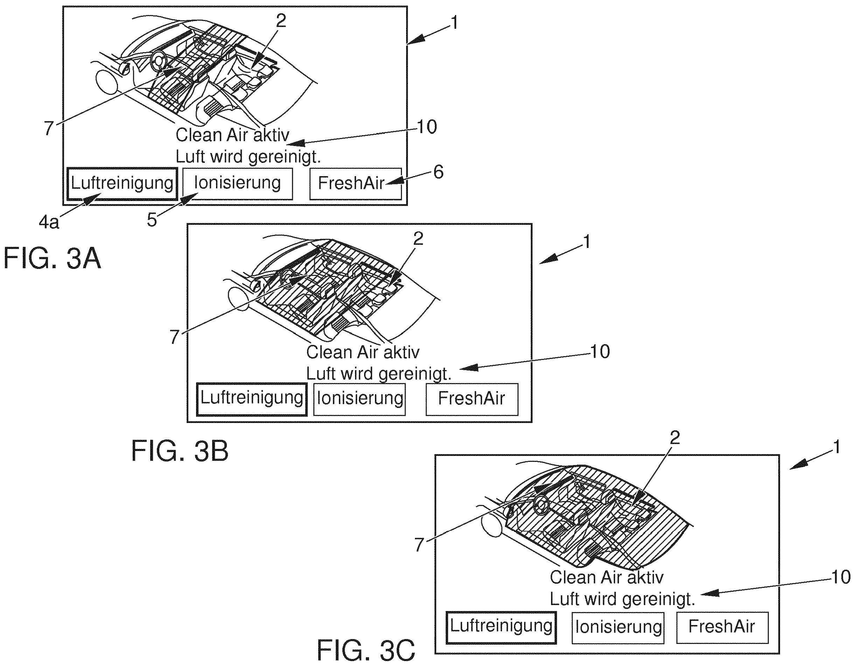

Mit Bezug zu Figur 3A bis 3C werden Ausführungsbeispiele einer graphischen Darstellung bei aktivierter Luftreinigungsfunktion 103a erläutert. Dabei wird von dem oben mit Bezug zu Figur 1 beschriebenen Fahrzeug und der mit Bezug zu Figur 2 erläuterten Anzeige bei deaktivierter Luftreinigungseinheit 103a ausgegangen.

In allen drei Figuren 3A, 3B, 3C ist eine aktivierte Schaltfläche "Luftreinigung" 4a dargestellt, die gegenüber der deaktivierten Schaltfläche 4 in Figur 2 graphisch hervorgehoben ist. Dies kann durch eine Schraffierung oder Strukturierung, farbliche Gestaltung, Helligkeit, Sättigung und Kontrast oder durch andere Mittel der Hervorhebung ausgeführt werden. Dadurch wird insbesondere dargestellt, dass die Luftreinigungseinheit 103a der Belüftungseinrichtung 103 aktiviert ist. Ferner wird eine Textmeldung 10 angezeigt, die den Nutzer über den Status der Belüftungseinrichtung, in diesem Fall also die Aktivität der Luftreinigungseinheit 103a, informiert.

Die Tätigkeit der Luftreinigungseinheit 103a wird durch die dynamische Darstellung einer teilweisen oder vollständigen Schutzhülle 7 verdeutlicht, die den dargestellten Innenraum 2 überzieht. Die Schutzhülle 7 vervollständigt dabei insbesondere die Darstellung der äußeren Fahrzeugoberfläche 3. Dem Nutzer wird damit signalisiert, dass je nach der Vollständigkeit der dargestellten Schutzhülle 7 ein mehr oder weniger vollständiger Schutz durch die Reinigung der Luft erreicht worden ist.

In dem dargestellten Fall beginnt die Schutzhülle 7, wie in Figur 3A dargestellt, sich im oberen Bereich des Fahrzeugs zu bilden und erstreckt sich über die gesamte Breite des Fahrzeuginnenraums 2. Sie wächst gleichzeitig nach vorne und hinten und überdeckt dabei einen zunehmend größeren Bereich des Fahrzeuginnenraums 2. Eine Zwischenstufe ist dabei in Figur 3B dargestellt, die maximale Überdeckung des Fahrzeuginnenraums 2 ist in Figur 3C dargestellt.

Dabei kann der Grad der Überdeckung des Fahrzeuginnenraums 2 durch die Schutzhülle 7 beispielsweise danach bestimmt werden, welche Luftqualität der Luftqualitätssensor 104a erfasst. Wird eine gute Luftqualität erfasst, charakterisiert beispielweise durch eine gering Konzentration von Partikeln einer bestimmten Größe, so wird ein größerer Überdeckungsgrad dargestellt als bei einer höheren Konzentration und folglich schlechterer Luftqualität.

Ferner kann die Überdeckung des Fahrzeuginnerraums 2 durch die Schutzhülle 7 periodisch dargestellt werden, unabhängig von einer tatsächlichen, durch den Luftqualitätssensor 104a bestimmten Luftqualität. In diesem Fall kann etwa dargestellt werden, dass die Luftreinigungseinheit 103a aktiviert ist und die Luft gereinigt wird. In diesem Fall kann etwa nach Auswahl der Schaltfläche "Luftreinigung" 4, 4a eine feste Animation abgespielt werden, beispielsweise mit einer festgelegten Anzahl Durchläufe.

Die Schutzhülle 7 kann auch auf andere Weise gebildet werden. Insbesondere kann sie sich von vorne aufbauen und nach hinten über den Fahrzeuginnenraum 2 ziehen, beziehungsweise sie kann umgekehrt von hinten beginnen und den Innenraum 2 nach vorne hin überziehen. Sie kann sich ferner alternativ oder zusätzlich in der Breite über den Innenraum 2 ausbreiten. Ferner kann die Schutzhülle 7 auf verschiedene Weise dargestellt werden. Sie kann etwa verschiedene Strukturierungen aufweisen, eine bestimmte Transparenz, Helligkeit oder Sättigung, wobei diese Parameter auch nach dem tatsächlichen Grad der Luftreinigung oder unabhängig davon bestimmt werden können.

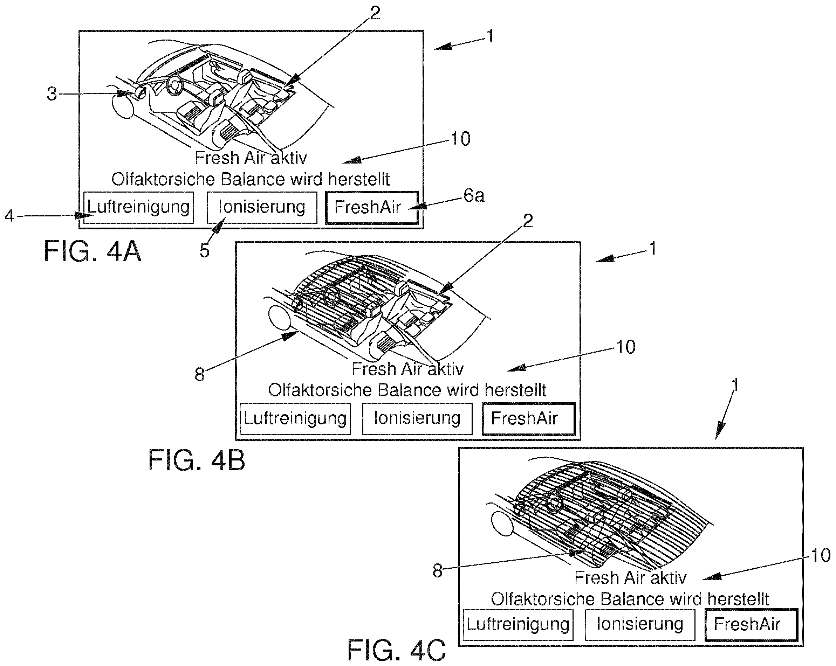

Mit Bezug zu den Figuren 4A bis 4C werden Ausführungsbeispiele einer graphischen Darstellung bei aktivierter Beduftungsfunktion 103c erläutert. Dabei wird von dem oben mit Bezug zu Figur 1 beschriebenen Fahrzeug und der mit Bezug zu Figur 2 erläuterten Anzeige bei deaktivierter Luftreinigungseinheit 103c ausgegangen.

In allen drei Figuren 4A, 4B, 4C ist die aktivierte Schaltfläche "Beduftung" 6a dargestellt, die graphisch hervorgehoben ist. Der Schriftzug auf der Schaltfläche 6a ist dabei selbstverständlich nicht relevant; im hier dargestellten Fall lautet er "FreshAir", allerdings kann jede andere geeignete Bezeichnung oder Darstellung dargestellt werden. Die Hervorhebung erfolgt insbesondere analog zu der in den Figuren 3A bis 3C dargestellten Hervorhebung der Schaltfläche "Luftreinigung" 4a. Dadurch wird insbesondere dargestellt, dass die Beduftungseinheit 103c der Belüftungseinrichtung 103 aktiviert ist. Ferner wird eine Textmeldung 10 angezeigt, die den Nutzer über den Status der Belüftungseinrichtung, in diesem Fall also die Aktivität der Beduftungseinheit 103c, informiert.

Die Tätigkeit der Beduftungseinheit 103c wird durch eine sternschnuppenähnlich bewegte Beduftungsdarstellung 8 über den dargestellten Innenraum 2 hinweg dargestellt. Die Beduftungsdarstellung 8 umfasst im Wesentlichen parallele Linien oder einen Bewegungsablauf von Lichtpunkten entlang solcher Linien, welche in ihrem Verlauf der Darstellung der äußeren Fahrzeugoberfläche 3 folgen. Die Linien sind insbesondere so gebildet, dass sie parallel erscheinen, auch wenn natürlich der Verlauf entlang der Fahrzeugoberfläche 3 ein strikt paralleles Verlaufen ausschließt. Der Verlauf beginnt insbesondere an der Scheibenwurzel der Frontscheibe und verläuft zum Wurzelpunkt der C-Säule. Dem Nutzer wird damit signalisiert, dass die Luft im Fahrzeuginnenraum 2 behandelt wird, ferner kann die Assoziation mit einem Schutzgitter um den Innenraum 2 herum hervorgerufen werden, etwa analog zu der Schutzhülle 7 in den Figuren 3A bis 3C.

In dem dargestellten Fall beginnt die Beduftungsdarstellung 8, ausgehend von einer in Figur 4A dargestellten Anzeige ohne die Beduftungsdarstellung 8, im vorderen Bereich des Fahrzeuginnenraums 3 sich zu bilden und erstreckt sich mit der Zeit nach in Längsrichtung des Fahrzeugs hinten über die gesamte Länge des Fahrzeuginnenraums 2. Sie überstreicht dabei den Innenraum 2. Eine Zwischenstufe ist dabei in Figur 4B dargestellt, die maximale Überdeckung des Fahrzeuginnenraums 2 ist in Figur 4C dargestellt.

Die Linien der Beduftungsdarstellung 8 werden dabei an der Bewegungsfront intensiver dargestellt und verblassen wieder. Ferner wird ein der Entstehung der Linien folgender "Schauer" von leuchtenden Partikeln dargestellt, die nach Art eines Schweifs von der Bewegungsfront ausgehen und ebenfalls nach ihrer Entstehung verblassen. Ferner kann die Darstellung einen von den leuchtenden Partikeln ausgehenden Nebel umfassen, wobei dies die Assoziation zu in den Innenraum 2 eintretenden Duftstoffen unterstützen kann. Die Geschwindigkeit der Bewegung über die Länge des Fahrzeuginnenraums 2 hinweg kann dabei auf verschiedene Weise bestimmt werden. Sie kann festgelegt sein, sodass die Darstellung eine Animation ist, die unabhängig von weiteren Parametern erzeugt wird. Sie kann ferner von Einstellungen der Beduftungseinheit 103c abhängen oder von einem Grad der bereits erreichten Beduftung. Insbesondere kann diese Bestimmung anhand der Erfassungseinheit 104 und des Luftqualitätssensors 104a erfolgen.

Ferner kann die Überdeckung des Fahrzeuginnerraums 2 durch die Beduftungsdarstellung 8 periodisch dargestellt werden, unabhängig von einer tatsächlichen, durch den Luftqualitätssensor 104a bestimmten Luftqualität. In diesem Fall kann etwa dargestellt werden, dass die Beduftungseinheit 103c aktiviert ist und die Luft beduftet wird, indem die Beduftungsdarstellung 8 über den Innenraum 2 hinwegzieht. In diesem Fall kann etwa nach Auswahl der Schaltfläche "Beduftung" 6, 6a eine feste Animation abgespielt werden, beispielsweise mit einer festgelegten Anzahl Durchläufe.

Die Beduftungsdarstellung 8 kann auch auf andere Weise gebildet werden. Insbesondere kann sie sich von den Seiten des Innenraums 2 aufbauen oder sie kann sich von hinten über den Fahrzeuginnenraum 2 ziehen. Sie kann ferner von einem Punkt außerhalb der Darstellung des Fahrzeugs ausgehen und sich über das Fahrzeug erstrecken. Sie kann sich ferner alternativ oder zusätzlich in der Breite über den Innenraum 2 ausbreiten. Ferner kann die Beduftungsdarstellung 8 auf verschiedene Weise dargestellt werden. Sie kann etwa verschiedene Strukturierungen aufweisen, eine bestimmte Transparenz, Helligkeit oder Sättigung, wobei diese Parameter auch nach dem tatsächlichen Grad der Beduftung bestimmt werden können oder periodisch geändert werden können. Insbesondere können Farben und/oder andere Gestaltungsmerkmale auf einen bestimmten Duftstoff hinweisen.

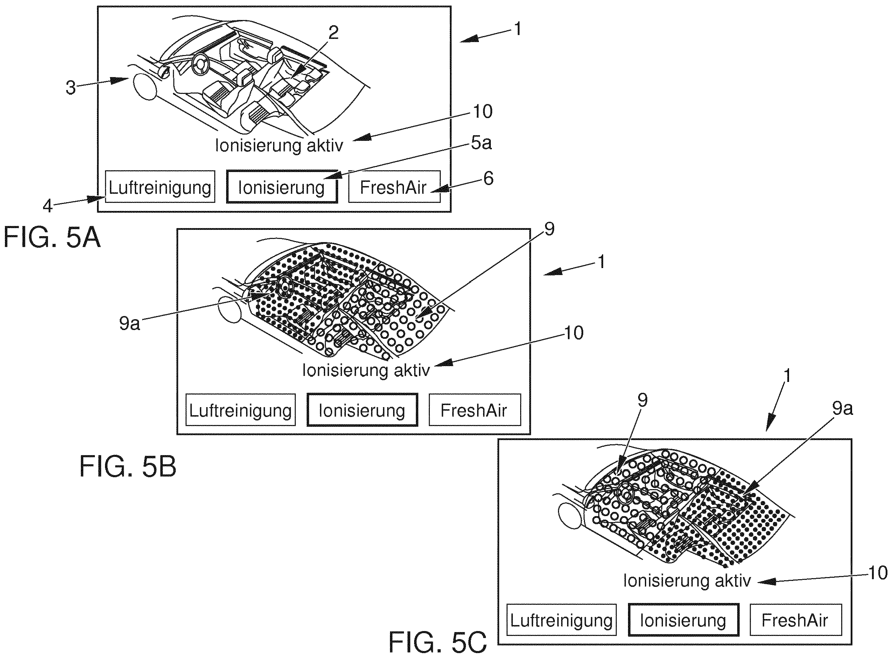

Mit Bezug zu den Figuren 5A bis 5C werden Ausführungsbeispiele einer graphischen Darstellung bei aktivierter Ionisierungsfunktion 103b erläutert. Dabei wird von dem oben mit Bezug zu Figur 1 beschriebenen Fahrzeug und der mit Bezug zu Figur 2 erläuterten Anzeige bei deaktivierter Ionisierungseinheit 103b ausgegangen.

In allen drei Figuren 5A, 5B, 5C ist die aktivierte Schaltfläche "Ionisierung" 5a dargestellt, die graphisch hervorgehoben ist. Die Hervorhebung erfolgt insbesondere analog zu der in den Figuren 3A bis 3C dargestellten Hervorhebung der Schaltfläche "Luftreinigung" 4a. Dadurch wird insbesondere dargestellt, dass die Ionisierungsfunktion 103b der Belüftungseinrichtung 103 aktiviert ist. Ferner wird eine Textmeldung 10 angezeigt, die den Nutzer über den Status der Belüftungseinrichtung, in diesem Fall also die Aktivität der Ionisierungseinheit 103b, informiert.

Die Tätigkeit der Ionisierungseinheit 103b wird versinnbildlicht durch eine Ionisierungsdarstellung 9, die sich über eine den dargestellten Innenraum 2 überdeckende Darstellung der Fahrzeugoberfläche 3 umfasst und ferner durch einen hellen Bereich 9a ergänzt wird. Die Ionisierungsdarstellung 9 umfasst im Wesentlichen eine Oberfläche des Fahrzeugs um den Innenraum 2 herum, wobei die Oberfläche im dargestellten Beispiel durch ein Punktmuster strukturiert ist. Die Strukturierung kann auf verschiedene Weise erfolgen. Insbesondere weisen die Punkte eine bestimmte Helligkeit auf. Durch Darstellung eines Helligkeitsgradienten über bestimmte Bereiche der Ionisierungsdarstellung 9, insbesondere durch Darstellung des hellen Bereichs 9a, kann eine pulsierende und/oder bewegte Illumination der Fahrzeughülle dargestellt werden.

In dem dargestellten Fall beginnt der helle Bereich 9a, ausgehend von einer in Figur 5A dargestellten Anzeige ohne die Ionisierungsdarstellung 9, sich im vorderen Bereich des Fahrzeuginnenraums 3 an der Scheibenwurzel der Frontscheibe zu bilden und bewegt sich von dort aus in Längsrichtung des Fahrzeugs nach hinten über die gesamte Länge des Fahrzeuginnenraums 2, etwa bis zum Wurzelpunkt der C-Säule. Er überstreicht dabei den Innenraum 2. Eine Zwischenstufe mit dem hellen Bereich 9a im vorderen Bereich oberhalb des Innenraums 2 ist dabei in Figur 5B dargestellt, Figur 5C zeigt den Fall, in dem der helle Bereich 9a das Fahrzeugheck erreicht.

Dies symbolisiert die Ionisierung der einströmenden Luft. Die Darstellung der durch Punkte strukturierten Ionisierungsdarstellung 9 kann an der Bewegungsfront intensiver dargestellt und wieder verblassen, nach dem der helle Bereich 9a diese Positionen überstrichen hat. Die Geschwindigkeit der Bewegung über die Länge des Fahrzeuginnenraums 2 hinweg kann dabei auf verschiedene Weise bestimmt werden. Sie kann festgelegt sein, sodass die Darstellung eine Animation ist, die unabhängig von weiteren Parametern erzeugt wird. Sie kann ferner von Einstellungen der Ionisierungseinheit 103b abhängen oder von einem Grad der bereits erreichten Ionisierung der Luft. Insbesondere kann diese Bestimmung anhand der Erfassungseinheit 104 und des Luftqualitätssensors 104a erfolgen.

Ferner kann das Überstreichen des Fahrzeuginnerraums 2 durch den hellen Bereich 9a periodisch dargestellt werden, unabhängig von einer tatsächlichen, durch den Luftqualitätssensor 104a bestimmten Luftqualität. In diesem Fall kann etwa dargestellt werden, dass die Ionisierungseinheit 103b aktiviert ist und die Luft ionisiert wird. In diesem Fall kann etwa nach Auswahl der Schaltfläche "Ionisierung" 5, 5a eine feste Animation abgespielt werden, beispielsweise mit einer festgelegten Anzahl Durchläufe.

Die Ionisierungsdarstellung 9 mit dem hellen Bereich 9a kann auch auf andere Weise gebildet werden. Insbesondere kann sie sich von den Seiten des Innenraums 2 aufbauen oder sie kann sich von hinten vom Heck ausgehend über den Fahrzeuginnenraum 2 nach vorne Richtung Front ziehen. Sie kann ferner von einem Punkt außerhalb der Darstellung des Fahrzeugs ausgehen und sich über das Fahrzeug erstrecken. Sie kann sich ferner alternativ oder zusätzlich in der Breite über den Innenraum 2 ausbreiten.

Ferner kann die Ionisierungsdarstellung 9 auf verschiedene Weise dargestellt werden. Sie kann etwa verschiedene Strukturierungen aufweisen, also nicht oder nicht nur Punkte, und eine bestimmte Transparenz, Helligkeit oder Sättigung aufweisen. Insbesondere kann auch der "helle Bereich" 9a auf andere Weise hervorgehoben werden als die Helligkeit. Dabei können die entsprechenden Parameter auch nach dem tatsächlichen Grad der Ionisierung bestimmt werden oder sie können periodisch geändert werden. Insbesondere können Farben und/oder andere Gestaltungsmerkmale auch auf ein bestimmtes Ionisierungsprogramm hinweisen.

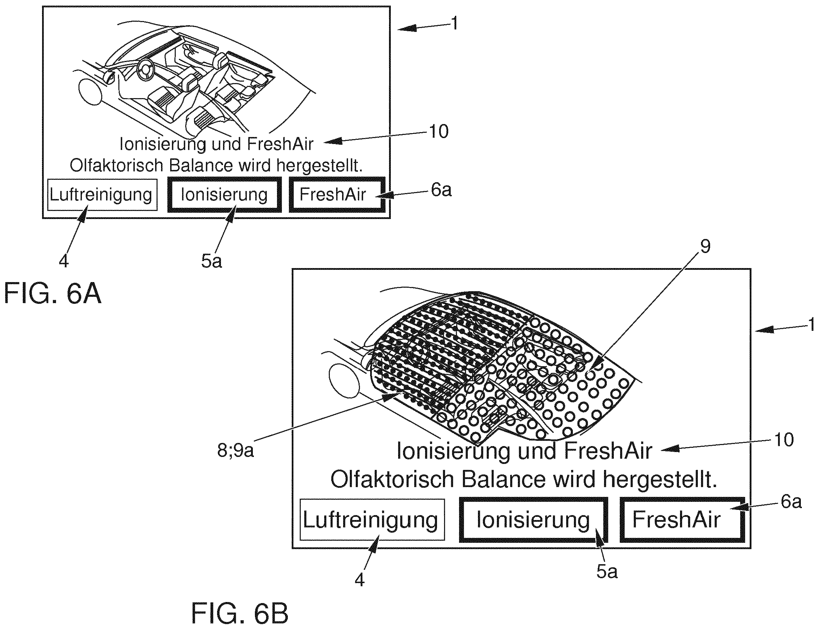

Mit Bezug zu den Figuren 6A und 6B werden Ausführungsbeispiele einer graphischen Darstellung bei gleichzeitig aktivierter Ionisierungsfunktion und Beduftungsfunktion erläutert. Die Darstellung wird analog zu den oben beschriebenen Darstellungen für die Ionisierung und Beduftung erzeugt. Allerdings werden hier mehrere Darstellungselemente kombiniert.

Wie in Figur 6A dargestellt, sind die Schaltflächen "Ionisierung" 5a und "Beduftung" 6a hervorgehoben dargestellt. Ferner informiert die Textmeldung 10 den Nutzer über die Aktivität der Ionisierungseinheit 103b und der Beduftungseinheit 103c der Belüftungseinrichtung 103.

Figur 6B zeigt nun, wie die Ionisierungsdarstellung 9 und die Beduftungsdarstellung 8 kombiniert werden: Die Fahrzeugoberfläche im Bereich des Innenraums 2 ist durch eine strukturierte Hülle 9 überdeckt. Dynamisch verläuft ein heller Bereich 9a über die Breite des dargestellten Fahrzeugs von der Front nach hinten zum Heck, während gleichzeitig ein Linienmuster mit einer sternschnuppenartigen Beduftungsdarstellung 8a mit einem Schweif in gleicher Richtung aufgebaut wird.

Die Geschwindigkeit der bewegten Komponenten der Beduftungsdarstellung 8a und des hellen Bereichs der Ionisierungsdarstellung 9a können insbesondere aufeinander abgestimmt sein, sodass die Überlagerung der beiden Darstellungen synchron erfolgt. Es kann allerdings auch eine zeitlich versetzte Darstellung angezeigt werden oder es kann sich durch verschiedene Geschwindigkeiten der dargestellten Bewegungen ein zeitlicher Versatz ergeben.

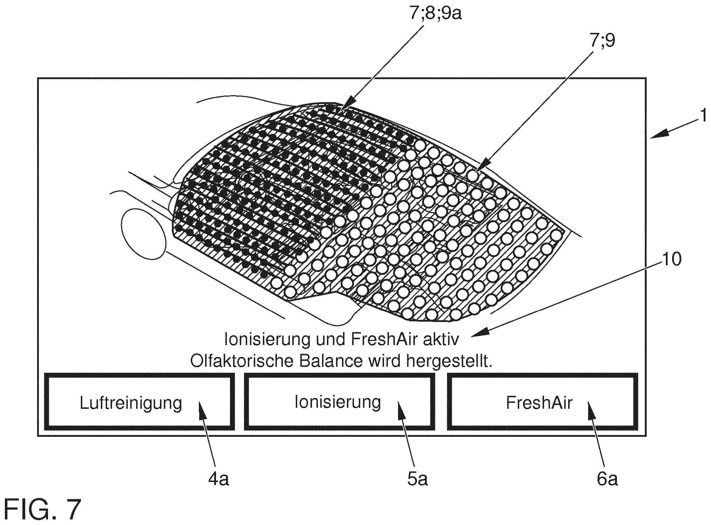

Mit Bezug zu Figur 7 wird ein Ausführungsbeispiel einer graphischen Darstellung bei gleichzeitig aktivierter Luftreinigungsfunktion, Ionisierungsfunktion und Beduftungsfunktion erläutert. Die Darstellung wird analog zu den oben beschriebenen Darstellungen für die verschiedenen Belüftungsfunktionen 103a, 103b, 103c erzeugt. Allerdings werden hier mehrere Darstellungselemente kombiniert.

Die in Figur 6B dargestellte Anzeige wird in Figur 7 noch durch eine Darstellung der aktiven Luftreinigung ergänzt. Dazu wird eine Schutzhülle 7, wie sie oben mit Bezug zu den Figuren 3A bis 3C erläutert wurde, gleichzeitig mit einer Ionisationsdarstellung 9, 9a und einer Beduftungsdarstellung 8a erzeugt. Auch hier kann durch Variation oder Synchronisierung der Geschwindigkeiten der einzelnen dynamischen Elemente der Darstellung ein Zeitversatz vermieden oder gezielt erreicht werden. Ferner kann beispielsweise die Darstellung der Schutzhülle 7 auf die Funktion der Luftreinigungseinheit 103a bezogen werden, etwa durch Messungen des Luftqualitätssensors 104a, während die anderen Darstellungen als unveränderte Animationen ablaufen.

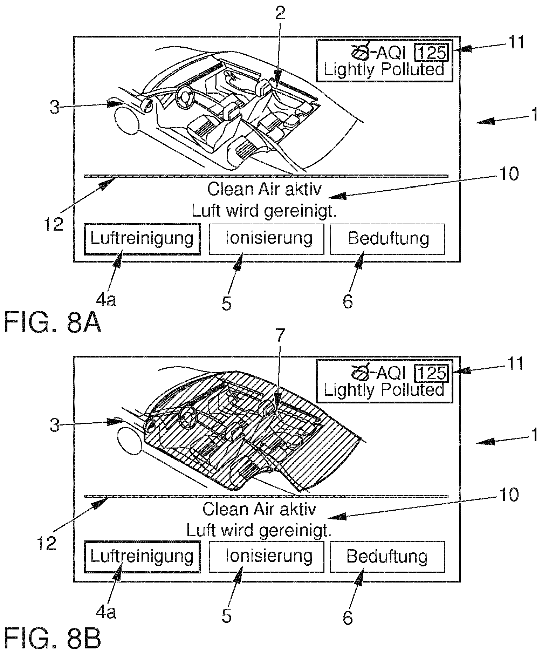

Mit Bezug zu den Figuren 8A und 8B werden Ausführungsbeispiele einer graphischen Darstellung mit einem Fortschrittsbalken bei aktivierter Luftreinigungsfunktion erläutert.

Der Fortschrittsbalken 12 wird in diesem Beispiel unterhalb der Darstellung des Fahrzeuginnenraums 2 und der Fahrzeugoberfläche 3 angezeigt. Er weist eine Breite auf, die fast der gesamten Breite der Anzeige 1 entspricht, sodass möglichst breiter Bereich genutzt wird. Dadurch können insbesondere langsamere Prozesse dargestellt werden, da der Nutzer auch kleinere Veränderungen der Länge des Fortschrittsbalkens 12 erfassen kann und damit den Fortschritt verfolgen kann. Fortschrittsbalken 12 sind an sich bekannt und der Nutzer kann auf diese Weise schnell erfassen, wie weit der zugeordnete Prozess vorangeschritten ist.

Der Fortschrittsbalken 12 dokumentiert den Fortschritt der Tätigkeit der Luftreinigungseinheit 103a, insbesondere kann ein durch den Luftqualitätssensor 104a erfasster Wert wiedergegeben werden. Je kürzer der blaue Bereich des Fortschrittsbalkens 12, desto schlechter ist die Luftqualität und je länger der blaue Bereich, desto besser. Wenn der gesamte Fortschrittsbalken 12 blau ist, ist ein Maximum der Luftreinigung erreicht.

In Figur 8A ist dieses Funktionsprinzip so dargestellt, dass die Darstellung des Innenraums 2 und der Oberfläche 3 des Fahrzeugs ergänzt werden durch eine Luftqualitätsmeldung 11. Insbesondere kann diese Daten wiedergeben, die außerhalb des Fahrzeugs erfasst wurde, entweder durch einen Sensor des Fahrzeugs oder durch andere Einrichtungen, von denen Informationen an das Fahrzeug übertragen werden können. Im dargestellten Fall zeigt die Luftqualitätsmeldung 11 an, dass eine leichte Verschmutzung erfasst wurde, was durch ein Symbol und einen Wert des AQI (*air quality index*) verdeutlicht wird. Insbesondere kann diese Darstellung die Notwendigkeit einer Luftreinigung verdeutlichen.

In Figur 8B wird der Fortschritt der Luftreinigung parallel zu dem Fortschrittsbalken 12 mittels einer dargestellten Schutzhülle 7 über dem Fahrzeuginnenraum 2 dargestellt. Die Darstellung wird also entsprechend der oben mit Bezug zu den Figuren 3A bis 3C beschriebenen Darstellung ergänzt.

Alle der oben beschriebenen Darstellungsformen könne beliebig miteinander kombiniert und modifiziert werden. Insbesondere ist keine der Darstellungsformen auf einen bestimmten Parameter der einströmenden Luft beschränkt, sondern es können verschiedene andere Parameter dargestellt werden.

Die oben beschriebenen dynamischen Anzeigen können auf verschiedene Weise erzeugt werden. Insbesondere kann ein Ablauf der jeweiligen Bewegungen in Stufen erfolgen, etwa in zehn Stufen, oder stufenlos. Insbesondere kann eine Animation mit einer bestimmten Anzahl von Bildern abgespielt werden oder es kann eine Wert eines Parameters zur Darstellung in mehreren Stufen oder kontinuierlich ausgegeben werden.

Die Anzeige 1 kann ferner in ein Anzeigekonzept integriert werden, indem Elemente der hier beschriebenen Darstellung 1 in eine andere Darstellung integriert werden. Beispielsweise können auf diese Weise verschiedene andere Informationen in die Anzeige1 integriert werden, etwa Ausgaben anderer Einrichtungen des Fahrzeugs 100.

### Bezugszeichenliste

- 1: Anzeige
- 2: Fahrzeuginnenraum (graphische Darstellung)
- 3: Fahrzeugoberfläche (graphische Darstellung)
- 4: Schaltfläche "Luftreinigung"
- 4a: Aktivierte Schaltfläche "Luftreinigung"
- 5: Schaltfläche "Ionisierung"
- 5a: Aktivierte Schaltfläche "Ionisierung"
- 6: Schaltfläche "Beduftung"
- 6a: Aktivierte Schaltfläche "Beduftung"
- 7: Reinigungsdarstellung, Schutzhülle
- 8: Beduftungsdarstellung
- 9: Ionisierungsdarstellung
- 9a: heller Bereich der Ionisierungsdarstellung
- 10: Textmeldung
- 11: Luftqualitätsmeldung
- 12: Fortschrittsbalken
- 100: Fahrzeug
- 101: Steuereinheit
- 102: Ausströmeinheit
- 103: Belüftungseinrichtung
- 103a: Luftreinigungseinheit
- 103b: Ionisierungseinheit
- 103c: Beduftungseinheit
- 104: Erfassungseinheit
- 104a: Luftqualitätssensor
- 105: Touchscreen
- 106: Anzeigeeinheit
- 106a: Anzeigefläche

## Patentansprüche

1. Verfahren zum Betreiben einer Belüftungseinrichtung (103) in einem Fahrzeug (100), bei dem
zumindest ein Luftstrom im Innenraum des Fahrzeugs (100) erzeugt wird,
ein Wert zumindest eines Parameters der einströmenden Luft erfasst wird,
in Abhängigkeit von dem Wert des erfassten Parameters Graphikdaten einer Anzeige (1) erzeugt werden, wobei die Anzeige (1) eine Darstellung des Fahrzeugs (100) und zumindest ein Graphikelement (7, 8, 9, 9a, 12) umfasst, das dem Wert des erfassten Parameters zugeordnet ist, und
die Graphikdaten der Darstellung angezeigt werden, wobei
der erfasste Parameter die Zusammensetzung der einströmenden Luft betrifft, wobei
die Anzeige (1) zumindest eine Schaltfläche (4, 4a, 5, 5a, 6, 6a) umfasst und,
wenn eine Auswahl der Schaltfläche (4, 4a, 5, 5a, 6, 6a) erfasst wird, der Wert des Parameters der einströmenden Luft verändert wird,
**dadurch gekennzeichnet, dass**
das Graphikelement (7, 8, 9, 9a) zumindest einen Bereich der äußeren Oberfläche (3) des Fahrzeugs (100) umfasst,
wobei das Graphikelement (7, 8, 9, 9a) der äußeren Oberfläche (3) des Fahrzeugs (100) folgt und die Ausdehnung des Graphikelements (7, 8, 9, 9a) einem Bedeckungsgrad des Innenraums entspricht.

2. Verfahren nach Anspruch 1,
**dadurch gekennzeichnet, dass**
die Darstellung des Fahrzeugs (100) eine Ansicht eines Bereichs des Innenraums (2) des Fahrzeugs (100) und einen Bereich der äußeren Oberfläche (3) des Fahrzeugs (100) umfasst.

3. Verfahren nach einem der vorhergehenden Ansprüche,
**dadurch gekennzeichnet, dass**
der erfasste Parameter eine Partikelkonzentration in der einströmenden Luft umfasst.

4. Verfahren nach einem der vorhergehenden Ansprüche,
**dadurch gekennzeichnet, dass**
der erfasste Parameter einen lonisationsgrad der einströmenden Luft umfasst.

5. Verfahren nach einem der vorhergehenden Ansprüche,
**dadurch gekennzeichnet, dass**
der erfasste Parameter eine Beduftung der einströmenden Luft umfasst.

6. Verfahren nach einem der vorhergehenden Ansprüche,
**dadurch gekennzeichnet, dass**
der Wert des erfassten Parameters in einem Werteintervall liegt, das durch einen Minimalwert und einen Maximalwert definiert ist, und der erfasste Wert durch das Graphikobjekt (7, 12) relativ zu dem Werteintervall dargestellt wird.

7. Verfahren nach Anspruch 6,
**dadurch gekennzeichnet, dass**
das Graphikelement (7, 12), das dem Wert des erfassten Parameters zugeordnet ist, durch eine Ausdehnung charakterisiert ist, wobei die Ausdehnung des Graphikelements (7, 12) größer oder gleich einer Minimalausdehnung und kleiner oder gleich einer Maximalausdehnung ist, wobei die Minimalausdehnung und die Maximalausdehnung den Minimalwert und den Maximalwert des definierten Werteintervalls angeben.

8. Verfahren nach einem der vorhergehenden Ansprüche,
**dadurch gekennzeichnet, dass**
das Graphikelement (7, 12) ein geometrisches Objekt mit einer Längsausdehnung darstellt.

9. Verfahren nach einem der vorhergehenden Ansprüche,
**dadurch gekennzeichnet, dass**
das Graphikelement (7, 8, 9, 9a, 12) eine in Abhängigkeit von dem Wert des Parameters gestaltete Strukturierung aufweist.

10. Verfahren nach einem der vorhergehenden Ansprüche,
**dadurch gekennzeichnet, dass**
die Darstellung des Fahrzeugs zumindest einen Darstellungsparameter der Helligkeit, der Sättigung und/oder des Kontrastes aufweist und der Darstellungsparameter in Abhängigkeit von dem Wert des Parameters gebildet wird.

11. Verfahren nach einem der vorhergehenden Ansprüche,
**dadurch gekennzeichnet, dass**
die Darstellung zumindest ein zeitlich veränderlich dargestelltes Graphikelement (7, 8, 9, 9a, 12) umfasst.

12. Verfahren nach einem der vorhergehenden Ansprüche,
**dadurch gekennzeichnet, dass**
die Darstellung des Innenraums (2) aus einer Perspektive von seitlich oben erzeugt wird.

13. System zum Betreiben einer Belüftungseinrichtung (103) in einem Fahrzeug (100), umfassend
zumindest eine Ausströmeinheit (102), durch die ein Luftstrom im Innenraum des Fahrzeugs (100) erzeugbar ist,
eine Erfassungseinheit (104), durch die ein Wert zumindest eines Parameters der einströmenden Luft erfassbar ist,
eine Steuereinheit (101), durch die in Abhängigkeit von dem Wert des erfassten Parameters Graphikdaten einer Anzeige (1) erzeugbar sind, wobei die Anzeige (1) eine Darstellung des Fahrzeugs (100) und zumindest ein Graphikelement (7, 8, 9, 9a, 12) umfasst, das dem Wert des erfassten Parameters zugeordnet ist, und
eine Anzeigeeinheit (106) zum Anzeigen der Graphikdaten, wobei
der erfasste Parameter die Zusammensetzung der einströmenden Luftbetrifft, wobei
die Anzeige (1) zumindest eine Schaltfläche (4, 4a, 5, 5a, 6, 6a) umfasst,
eine Auswahl der Schaltfläche (4, 4a, 5, 5a, 6, 6a) erfassbar ist und durch die Auswahl der Schaltfläche (4, 4a, 5, 5a, 6, 6a) der Wert des Parameters der einströmenden Luft veränderbar ist,
**dadurch gekennzeichnet, dass**
das Graphikelement (7, 8, 9, 9a) zumindest einen Bereich der äußeren Oberfläche (3) des Fahrzeugs (100) umfasst,
wobei das Graphikelement (7, 8, 9, 9a) der äußeren Oberfläche (3) des Fahrzeugs (100) folgt und die Ausdehnung des Graphikelements (7, 8, 9, 9a) einem Bedeckungsgrad des Innenraums entspricht.

14. Fahrzeug (100) mit einer Belüftungseinrichtung (103) und einem System zum Betreiben der Belüftungseinrichtung (103) nach Anspruch 13.

## Claims

1. Method for operating a ventilation device (103) in a vehicle (100), in which
at least one air stream is generated in the passenger compartment of the vehicle (100),
a value of at least one parameter of the inflowing air is recorded,
graphic data of a display (1) are generated in dependence on the value of the recorded parameter, wherein the display (1) comprises a representation of the vehicle (100) and at least one graphic element (7, 8, 9, 9a, 12), which is assigned to the value of the recorded parameter, and
the graphic data of the representation are displayed, wherein
the recorded parameter concerns the composition of the inflowing air, wherein
the display (1) comprises at least one button (4, 4a, 5, 5a, 6, 6a) and,
if a selection of the button (4, 4a, 5, 5a, 6, 6a) is recorded, the value of the parameter of the inflowing air is changed,
**characterized in that**
the graphic element (7, 8, 9, 9a) comprises at least one region of the outer surface (3) of the vehicle (100),
wherein the graphic element (7, 8, 9, 9a) follows the outer surface (3) of the vehicle (100) and the extent of the graphic element (7, 8, 9, 9a) corresponds to a degree of coverage of the passenger compartment.

2. Method according to Claim 1,
**characterized in that**
the representation of the vehicle (100) comprises a view of a region of the passenger compartment (2) of the vehicle (100) and a region of the outer surface (3) of the vehicle (100).

3. Method according to one of the preceding claims,
**characterized in that**
the recorded parameter comprises a particle concentration in the inflowing air.

4. Method according to one of the preceding claims,
**characterized in that**
the recorded parameter comprises a degree of ionization of the inflowing air.

5. Method according to one of the preceding claims,
**characterized in that**
the recorded parameter comprises a fragrancing of the inflowing air.

6. Method according to one of the preceding claims,
**characterized in that**
the value of the recorded parameter lies in an interval of values which is defined by a minimum value and a maximum value, and the recorded value is represented by the graphic object (7, 12) in relation to the interval of values.

7. Method according to Claim 6,
**characterized in that**
the graphic element (7, 12), which is assigned to the value of the recorded parameter, is **characterized by** an extent, wherein the extent of the graphic element (7, 12) is greater than or equal to a minimum extent and less than or equal to a maximum extent, wherein the minimum extent and the maximum extent indicate the minimum value and the maximum value of the defined interval of values.

8. Method according to one of the preceding claims,
**characterized in that**
the graphic element (7, 12) represents a geometrical object with a longitudinal extent.

9. Method according to one of the preceding claims,
**characterized in that**
the graphic element (7, 8, 9, 9a, 12) has a structuring designed in dependence on the value of the parameter.

10. Method according to one of the preceding claims,
**characterized in that**
the representation of the vehicle has at least one representation parameter of the brightness, the saturation and/or the contrast and the representation parameter is formed in dependence on the value of the parameter.

11. Method according to one of the preceding claims,
**characterized in that**
the representation comprises at least one graphic element (7, 8, 9, 9a, 12) that is represented variably over time.

12. Method according to one of the preceding claims,
**characterized in that**
the representation of the passenger compartment (2) is generated from a perspective from laterally above.

13. System for operating a ventilation device (103) in a vehicle (100), comprising
at least one outflow unit (102), by which an air stream can be generated in the passenger compartment of the vehicle (100),
a recording unit (104), by which a value of at least one parameter of the inflowing air can be recorded,
a control unit (101), by which graphic data of a display (1) can be generated in dependence on the value of the recorded parameter, wherein the display (1) comprises a representation of the vehicle (100) and at least one graphic element (7, 8, 9, 9a, 12), which is assigned to the value of the recorded parameter, and
a display unit (106) for displaying the graphic data, wherein
the recorded parameter concerns the composition of the inflowing air, wherein
the display (1) comprises at least one button (4, 4a, 5, 5a, 6, 6a),
a selection of the button (4, 4a, 5, 5a, 6, 6a) can be recorded and the value of the parameter of the inflowing air can be changed by the selection of the button (4, 4a, 5, 5a, 6, 6a),
**characterized in that**
the graphic element (7, 8, 9, 9a) comprises at least one region of the outer surface (3) of the vehicle (100),
wherein the graphic element (7, 8, 9, 9a) follows the outer surface (3) of the vehicle (100) and the extent of the graphic element (7, 8, 9, 9a) corresponds to a degree of coverage of the passenger compartment.

14. Vehicle (100) with a ventilation device (103) and a system for operating the ventilation device (103) according to Claim 13.

## Revendications

1. Procédé permettant de faire fonctionner un dispositif d'aération (103) dans un véhicule (100), dans lequel
au moins un flux d'air est produit dans l'habitacle du véhicule (100),
une valeur d'au moins un paramètre de l'air entrant est détectée,
en fonction de la valeur du paramètre détecté, des données graphiques d'un affichage (1) sont produites, l'affichage (1) comprenant une représentation du véhicule (100) et au moins un élément graphique (7, 8, 9, 9a, 12) qui est associé à la valeur du paramètre détecté, et
les données graphiques de la représentation sont affichées, dans lequel
le paramètre détecté concerne la composition de l'air entrant,
dans lequel
l'affichage (1) comprend au moins un bouton (4, 4a, 5, 5a, 6, 6a), et
lorsqu'une sélection du bouton (4, 4a, 5, 5a, 6, 6a) est détectée, la valeur du paramètre de l'air entrant est modifiée,
**caractérisé en ce que** l'élément graphique (7, 8, 9, 9a) comprend au moins une partie de la surface extérieure (3) du véhicule (100),
l'élément graphique (7, 8, 9, 9a) suivant la surface extérieure (3) du véhicule (100), et l'étendue de l'élément graphique (7, 8, 9, 9a) correspondant à un degré de recouvrement de l'habitacle.

2. Procédé selon la revendication 1, **caractérisé en ce que** la représentation du véhicule (100) comprend une vue d'une partie de l'habitacle (2) du véhicule (100) et d'une partie de la surface extérieure (3) du véhicule (100).

3. Procédé selon l'une quelconque des revendications précédentes, **caractérisé en ce que** le paramètre détecté comprend une concentration en particules dans l'air entrant.

4. Procédé selon l'une quelconque des revendications précédentes, **caractérisé en ce que** le paramètre détecté comprend un degré d'ionisation de l'air entrant.

5. Procédé selon l'une quelconque des revendications précédentes, **caractérisé en ce que** le paramètre détecté comprend un parfumage de l'air entrant.

6. Procédé selon l'une quelconque des revendications précédentes, **caractérisé en ce que** la valeur du paramètre détecté se trouve dans un intervalle de valeurs qui est défini par une valeur minimale et une valeur maximale, et la valeur détectée est représentée par l'objet graphique (7, 12) par rapport à l'intervalle de valeurs.

7. Procédé selon la revendication 6, **caractérisé en ce que** l'élément graphique (7, 12) qui est associé à la valeur du paramètre détecté est **caractérisé par** une étendue, l'étendue de l'élément graphique (7, 12) étant supérieure ou égale à une étendue minimale et inférieure ou égale à une étendue maximale, l'étendue minimale et l'étendue maximale indiquant la valeur minimale et la valeur maximale de l'intervalle de valeurs défini.

8. Procédé selon l'une quelconque des revendications précédentes, **caractérisé en ce que** l'élément graphique (7, 12) représente un objet géométrique ayant une étendue longitudinale.

9. Procédé selon l'une quelconque des revendications précédentes, **caractérisé en ce que** l'élément graphique (7, 8, 9, 9a, 12) présente une structuration configurée en fonction de la valeur du paramètre.

10. Procédé selon l'une quelconque des revendications précédentes, **caractérisé en ce que** la représentation du véhicule présente au moins un paramètre de représentation parmi la luminosité, la saturation et/ou le contraste, et le paramètre de représentation est formé en fonction de la valeur du paramètre.

11. Procédé selon l'une quelconque des revendications précédentes, **caractérisé en ce que** la représentation comprend au moins un élément graphique (7, 8, 9, 9a, 12) représenté de manière variable dans le temps.

12. Procédé selon l'une quelconque des revendications précédentes, **caractérisé en ce que** la représentation de l'habitacle (2) est produite à partir d'une perspective latéralement d'en haut.

13. Système permettant de faire fonctionner un dispositif d'aération (103) dans un véhicule (100), comprenant
au moins une unité d'écoulement (102) permettant de produire un flux d'air dans l'habitacle du véhicule (100),
une unité de détection (104) permettant de détecter une valeur d'au moins un paramètre de l'air entrant,
une unité de commande (101) permettant de produire des données graphiques d'un affichage (1) en fonction de la valeur du paramètre détecté, l'affichage (1) comprenant une représentation du véhicule (100) et au moins un élément graphique (7, 8, 9, 9a, 12) qui est associé à la valeur du paramètre détecté, et
une unité d'affichage (106) pour afficher les données graphiques, dans lequel
le paramètre détecté concerne la composition de l'air entrant,
dans lequel
l'affichage (1) comprend au moins un bouton (4, 4a, 5, 5a, 6, 6a),
une sélection du bouton (4, 4a, 5, 5a, 6, 6a) peut être détectée, et la sélection du bouton (4, 4a, 5, 5a, 6, 6a) permet de modifier la valeur du paramètre de l'air entrant,
**caractérisé en ce que** l'élément graphique (7, 8, 9, 9a) comprend au moins une partie de la surface extérieure (3) du véhicule (100),
l'élément graphique (7, 8, 9, 9a) suivant la surface extérieure (3) du véhicule (100), et l'étendue de l'élément graphique (7, 8, 9, 9a) correspondant à un degré de recouvrement de l'habitacle.

14. Véhicule (100) comprenant un dispositif d'aération (103) et un système permettant de faire fonctionner le dispositif d'aération (103) selon la revendication 13.
